# EUROPÄISCHE PATENTSCHRIFT

(11) **EP 3 374 202 B1**
(45) Veröffentlichungstag und Bekanntmachung des Hinweises auf die Patenterteilung: **25.12.2019**
(21) Anmeldenummer: 16748304.9
(22) Anmeldetag: 09.08.2016
(51) Int. Cl.: B60C 9/20

(54) **FAHRZEUGLUFTREIFEN**
PNEUMATIC VEHICLE TIRE
PNEUMATIQUES DE VÉHICULE

(30) Priorität: 13.11.2015 DE 102015222447
(43) Veröffentlichungstag der Anmeldung: 19.09.2018
(73) Patentinhaber: Continental Reifen Deutschland GmbH, 30165 Hannover (DE)
(72) Erfinder: LACKO, Michal, 02001 Puchov (SK); GEHLAUF, Matthias, 31319 Sehnde (DE); LACKO, Peter, 02001 Puchov (SK)
(74) Vertreter: Finger, Karsten
(86) Internationale Anmeldenummer: PCT/EP2016/068961
(87) Internationale Veröffentlichungsnummer: WO 2017/080692

(56) Entgegenhaltungen:
- DE-A1-102005 057 823
- DE-A1-102006 020 933
- DE-A1-102011 054 975
- FR-A1- 2 800 672
- JP-A- S59 118 507
- US-A1- 2006 032 571

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, wobei die zweite Gürtellage und die dritte Gürtellage Arbeitslagen sind, bei denen die Festigkeitsträger der zweiten Gürtellage in ihrer Ausrichtung einen Winkel α zur Umfangsrichtung U mit 10°<α<45° und die Festigkeitsträger der dritten Gürtellage in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger der zweiten Gürtellage eine entgegengesetzte axiale Neigungsrichtung zu den Festigkeitsträgern der dritten Gürtellage aufweisen, und wobei die Festigkeitsträger der ersten Gürtellage in ihrer Ausrichtung einen Winkel β zur Umfangsrichtung U mit 46°≤β≤54° einschließen.

Es ist bekannt, dass die Auslegung der Gürtelkonstruktion maßgeblichen Einfluss auf das Abriebbild von Nutzfahrzeug-Reifen (NFZ-Reifen) einnimmt. Üblich ist beispielsweise die Verwendung eines sogenannten Rautengürtels mit typischerweise vier Lagen, deren Stahlkorde mit der Umfangsrichtung des Reifens einen Winkel von 16° bis 20° einschließen und die Lagen derart aufgelegt sind, dass sich die Stahlkorte abwechselnd kreuzen. Ein weiterer typischer Gürtel für Nutzfahrzeugreifen ist der sogenannte Dreiecksgürtel mit vier Lagen, wobei die Stahlkorde in der ersten, radial innersten Gürtellage einen Winkel von 50° bis 65° mit der Umfangsrichtung einschließen. Es ist ferner üblich, dass die Orientierung der Stahlkorde in den einzelnen Gürtellagen zur Umfangsrichtung mit R für eine Neigung nach rechts und mit L für eine Neigung nach links bezeichnet wird. Eine typische Abfolge derartiger Nutzfahrzeugreifen ist RRLL mit einem Winkel von beispielsweise 50° in der ersten (radial innersten) Gürtellage und einem Winkel von jeweils 18° in den anderen Gürtellagen.

Aus der DE 10 2006 020 933 A1 ist ein Gürtel bekannt, bei dem die Festigkeitsträger der ersten, radial innersten Gürtellage einen Winkel von 50° bis 65° mit der Umfangsrichtung einschließen. Die zweite und dritte Gürtellage weisen Festigkeitsträger auf, die jeweils einen gleichen Winkel von 16° bis 20° mit der Umfangsrichtung einschließen. Die vierte Gürtellage weist einen sehr großen Winkel mit der Umfangsrichtung auf und beträgt zwischen 50° und 90°, vorzugsweise zwischen 70° und 90°. Die Abfolge der Anordnung der Festigkeitsträger von der ersten zur vierten Gürtellage ist RRLR. Durch diese spezielle Gürtelausrichtung kann erreicht werden, dass der Schulterabrieb vermindert ist.

Aus der DE 10 2011 054 975 A1 ist eine Ausbildung eines Nutzfahrzeugreifens mit vier Gürtellagen bekannt, bei welcher die Festigkeitsträger der ersten, radial innersten Gürtellage und die Festigkeitsträger der vierten, radial äußersten Gürtellage mit einem Winkel zwischen 40° und 55° zur Umfangsrichtung und die Festigkeitsträger der zweiten und dritten Gürtellage unter Einschluss eines Winkels von 10° und 30° zur Umfangsrichtung ausgebildet sind. Die Abfolge der Anordnung der Festigkeitsträger von der ersten zur vierten Gürtellage ist RRLL. Diese Ausbildung ermöglicht es, den überproportionalen Abrieb im Schulterbereich weiter zu reduzieren und somit die Abriebsform des Gesamtreifens weiter zu vergleichmäßigen.

Aus der gattungsgemäßen JP S59 118507 A ist ein Reifen mit vier Gürtellagen bekannt, bei welchen die Festigkeitsträger der ersten Gürtellage in einem Bereich von 50° bis 70° zur Umfangsrichtung ausgerichtet sind und die Festigkeitsträger der zweiten Gürtellage in einem Bereich von 10° bis 20° zur Umfangsrichtung ausgerichtet sind. Die Festigkeitsträger der ersten und dritten und vierten Gürtellage sind mit gleicher Neigungsrichtung ausgerichtet. Die Festigkeitsträger der zweiten Gürtellage sind hierzu entgegengesetzt geneigt.

Der Erfindung liegt die Aufgabe zugrunde, einen derartigen Nutzfahrzeugreifen mit Gürtel mit vier Gürtellagen zu ermöglichen, bei dem die Abriebsrate des gesamten Reifens reduziert werden kann, ohne die Abriebsform zu verschlechtern.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, wobei die zweite Gürtellage und die dritte Gürtellage Arbeitslagen sind, bei denen die Festigkeitsträger der zweiten Gürtellage in ihrer Ausrichtung einen Winkel α zur Umfangsrichtung U mit 10°<α<45° und die Festigkeitsträger der dritten Gürtellage in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger der zweiten Gürtellage eine entgegengesetzte axiale Neigungsrichtung zu den Festigkeitsträgern der dritten Gürtellage aufweisen, und wobei die Festigkeitsträger der ersten Gürtellage in ihrer Ausrichtung einen Winkel β zur Umfangsrichtung U mit 46°≤β≤54° einschließen, gemäß den Merkmalen von Anspruch 1 gelöst, bei dem die Festigkeitsträger der vierten Gürtellage in ihrer Ausrichtung einen Winkel ε zur Umfangsrichtung U mit 46°≤ε<54° einschließen und dass die Festigkeitsträger der ersten Gürtellage und die Festigkeitsträger der dritten Gürtellage und die Festigkeitsträger der vierten Gürtellage im Reifen mit gleicher axialer Neigungsrichtung ausgerichtet sind, wobei die Festigkeitsträger der vier Gürtellagen Stahlkorde sind.

Es hat sich gezeigt, dass Nutzfahrzeugreifen mit einer derartigen Ausbildung trotz gutem Abriebsbild eine deutlich verbesserte Abriebsrate aufweisen. Dies liegt vermutlich daran, dass die entgegengesetzte Ausrichtung dieser ersten und zweiten Gürtellagen im Gürtelpaket eine höhere Steifigkeit in Umfangsrichtung bewirken, wobei die Ausbildung mit Festigkeitsträgern aus Stahlkord in den vier Gürtellagen eine gute Anbindung von Gummimaterial des Gürtels an die Festigkeitsträger im Vulkanisationsprozess begünstigt bei Nutzung einer hohen Festigkeit der Festigkeitsträger und geringem Aufwand.

Besonders vorteilhaft ist die Ausbildung eines Fahrzeugluftreifens gemäß den Merkmalen von Anspruch 2, wobei der Winkel α zur Umfangsrichtung U mit 15°≤α≤30° - insbesondere α=18°- und der Winkel γ zur Umfangsrichtung U mit 15°≤γ≤30°- insbesondere γ =18°- ausgebildet ist. Die Ausbildung ermöglicht einen besonders guten Kompromiss aus hoher Umfangs- und hoher Quersteifigkeit des Gürtelpaketes.

Besonders vorteilhaft ist die Ausbildung eines Fahrzeugluftreifens gemäß den Merkmalen von Anspruch 3, wobei der Winkel β zur Umfangsrichtung U mit β =50° ausgebildet ist. Es hat sich gezeigt, dass Nutzfahrzeugreifen gerade mit einer derartigen Ausbildung trotz gutem Abriebsbild eine weiter verbesserte Abriebsrate aufweisen. Dies liegt vermutlich daran, dass hierdurch zusätzlich eine weiter erhöhte laterale Steifigkeit bewirkt wird.

Besonders vorteilhaft ist die Ausbildung eines Fahrzeugluftreifens gemäß den Merkmalen von Anspruch 4, wobei der Winkel ε zur Umfangsrichtung U mit ε =50° ausgebildet ist. Hierdurch kann das Abriebsbild weiter optimiert werden.

Besonders vorteilhaft ist die Ausbildung eines Fahrzeugluftreifens gemäß den Merkmalen von Anspruch 5, wobei die Neigung der Festigkeitsträger der vier Gürtellagen zur Umfangsrichtung U beginnend bei der ersten Gürtellage bis zur vierten Gürtellage einer Abfolge LRLL folgt, wobei L linkssteigend und R rechtssteigend ist. Es hat sich gezeigt, dass durch diese Ausbildung die Abriebsrate im normalen Straßeneinsatz weiter optimiert werden kann.

Besonders vorteilhaft ist die Ausbildung eines Fahrzeugluftreifens gemäß den Merkmalen von Anspruch 6, wobei die zweite Gürtellage in ihrer axialen Erstreckung im Fahrzeugluftreifen größer ausgebildet ist als alle anderen Gürtellagen des Gürtels. Hierdurch können die im Bereich der Reifenschulter zwischen zweiter und dritter Gürtellage erzeugten Scherkräfte weiter reduziert werden.

Besonders vorteilhaft ist die Ausbildung eines Fahrzeugluftreifens gemäß den Merkmalen von Anspruch 7, wobei die dritte Gürtellage in ihrer axialen Erstreckung im Fahrzeugluftreifen größer ausgebildet ist als die erste und die vierte Gürtellage. Dies ermöglicht eine besonders gleichförmige Steifigkeitsverteilung in der zweiten Gürtellage.

Besonders vorteilhaft ist die Ausbildung eines Fahrzeugluftreifens gemäß den Merkmalen von Anspruch 8, wobei die Festigkeitsträger der beiden Arbeitslagen im Reifen dehnbar ausgebildet sind mit einer Dehnung D von D ≥ 0,2% bei 10% der Bruchkraft. Die Ausbildung ermöglicht eine verbesserte Herstellbarkeit. Darüber hinaus wird hierdurch in einfacher Weise ein besonders gegen Durchstechen oder Durchstoßen widerstandsfähiges Gürtelpaket ermöglicht.

Die Erfindung wird im Folgenden an Hand der in den Fig.1 bis Fig.2 dargestellten Ausführungsbeispiele eines Nutzfahrzeugluftreifens radialer Bauart erläutert. Darin zeigen
- Fig.1: die Querschnittdarstellung eines Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind.

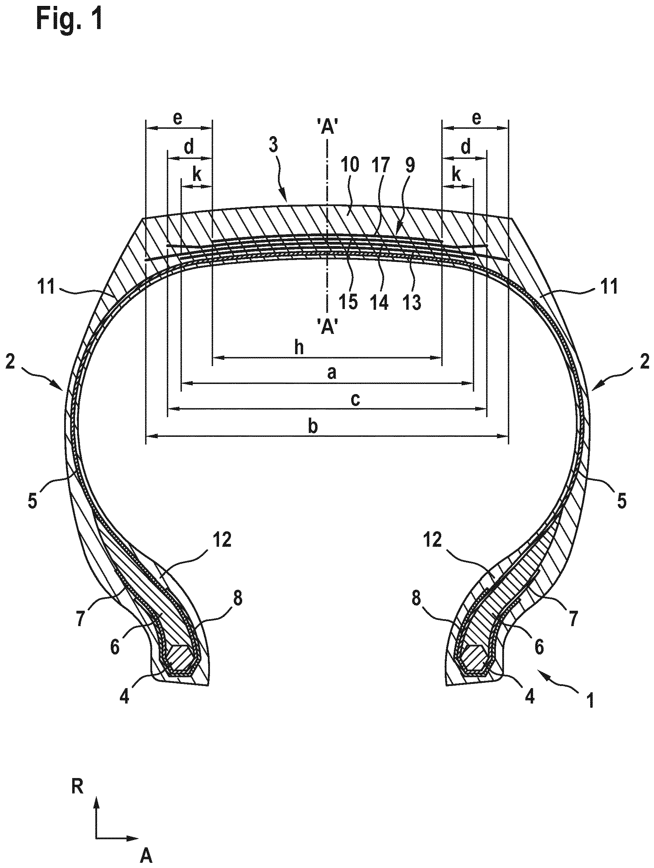

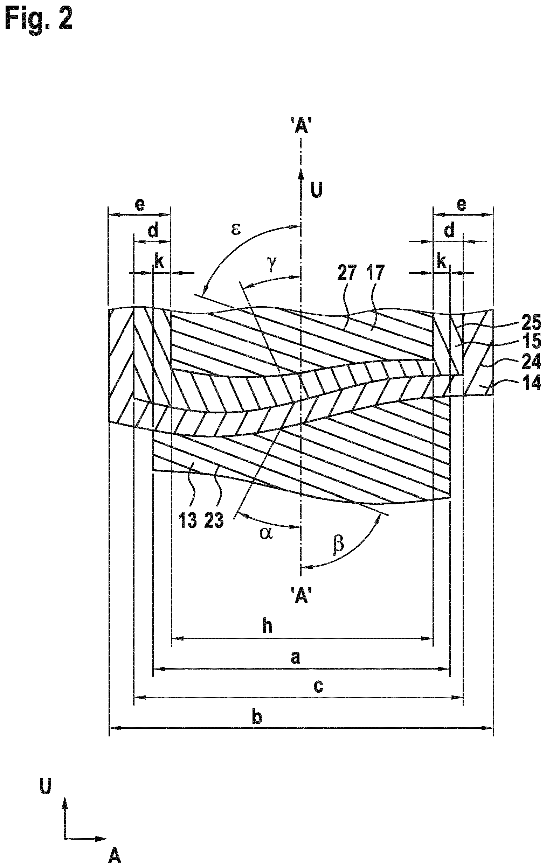

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich (Kopfbereich) 3. Die Seitenwände 2 sind an ihrem in radialer Richtung nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse 5 ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden -, welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone (des Reifenkopfes) 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus vier in radialer Richtung R von innen nach außen übereinander und aufeinanderliegend angeordneten Gürtellagen 13,14, 15 und 17 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die in radialer Richtung R am weitesten innen angeordnete Gürtellage 13 des Gürtels bildet die erste Gürtellage 13. Die in radialer Richtung R außerhalb der ersten Gürtellage 13 auf der ersten Gürtellage 13 angeordnete Gürtellage 14 bildet die zweite Gürtellage 14. Die in radialer Richtung R außerhalb der zweiten Gürtellage 14 auf der zweiten Gürtellage 14 angeordnete Gürtellage 15 bildet die dritte Gürtellage 15. Die in radialer Richtung R außerhalb der dritten Gürtellage 15 auf der dritten Gürtellage 15 angeordnete Gürtellage 17 bildet die vierte Gürtellage 17.

Die Gürtellage 14 und die Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter, wobei sie zumindest in Teilabschnitten in Berührkontakt zueinander angeordnet sind. Die Arbeitslage 14 ist aus einer Lage von in Gummi eingebetteten fadenförmigen parallelen Festigkeitsträgern 24 ausgebildet, welche sich über die gesamte in axialer Richtung A gemessene Breite b der Gürtellage 13 im Wesentlichen geradlinig erstrecken und einen Neigungswinkels α zur Umfangsrichtung U einschließen mit 10° ≤ α ≤ 45°. In einer besonderen Ausführung ist α mit 15° ≤ α ≤ 30°gewählt.

Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. In einer besonderen Ausführung ist γ mit 15° < γ ≤ 30°gewählt.

Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 24 der Arbeitslage 14 ausgebildet.

Die in radialer Richtung R innerhalb der zweiten Gürtellagen 14 ausgebildete erste Gürtellage 13 erstreckt sich in Umfangsrichtung U über den gesamten Umfang des Fahrzeugluftreifens und in axialer Richtung A - zumindest in Teilabschnitten in Berührkontakt zur Gürtellage 14 - von linker Reifenschulter zur rechten Reifenschulter. Die Gürtellage 13 ist aus parallelen fadenförmigen in Gummi eingebetteten Festigkeitsträgern 24 ausgebildet, welche sich über die gesamte axiale Breite a der Gürtellage 13 im Wesentlichen geradlinig erstrecken und einen Neigungswinkel β zur Umfangsrichtung U einschließen mit 46° ≤ β ≤ 54°, beispielsweise mit β = 50°.

Die in radialer Richtung R außerhalb der dritten Gürtellage 15 angeordneten vierte Gürtellage 17 erstreckt sich in Umfangsrichtung U über den gesamten Umfang des Fahrzeugluftreifens und in axialer Richtung A des Fahrzeugluftreifens von linker Reifenschulter bis zur rechten Reifenschulter und zumindest in Teilabschnitten in Berührkontakt zur Gürtellage 15. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 46°≤ε ≤54°, beispielsweise mit ε = 50°.

Die Festigkeitsträger 27 der vierten Gürtellage 17 sind in einer Ausführung - wie in Fig.2 dargestellt - mit einer längs der Erstreckung in Umfangsrichtung U des Reifens gesehen gleichen axialen Neigungsrichtung wie die Festigkeitsträger 25 der dritten Gürtellage 15 und wie die Festigkeitsträger 23 der ersten Gürtellage 13 und somit mit einer entgegengesetzten axialen Neigungsrichtung wie die Festigkeitsträger 24 der zweiten Gürtellage 14 ausgerichtet.

Dabei ist die Neigung der Festigkeitsträger 23, 25 und 27 zur Umfangsrichtung U ist rechtssteigend und die Neigung der Festigkeitsträger 24 zur Umfangsrichtung U ist linkssteigend gewählt. Die Neigung der Festigkeitsträger zur Umfangsrichtung ist in den einzelnen Gürtellagen 13,14,15,17, beginnend bei der radial innersten Gürtellage 13 , ist somit derart, dass die Abfolge LRLL (linkssteigend, rechtssteigend, linkssteigend, linkssteigend) vorliegt.

Alle vier Gürtellagen 13,14,15 und 17 erstrecken sich zu beiden axialen Seiten jeweils bis in eine Position in der jeweiligen Reifenschulter. Die Gürtellage 17 ist zumindest über einen Teil ihrer axialen Erstreckung in direktem Berührkontakt zu der unter ihr angeordneten dritten Gürtellage (obere Arbeitslage) 15.

Die zweite Gürtellage (untere Arbeitslage) 14 erstreckt sich in axialer Richtung A über eine axiale Breite b, die erste Gürtellage 13 erstreckt sich in axialer Richtung A über eine axiale Breite a und die dritte Gürtellage (obere Arbeitslage) 15 erstreckt sich in axialer Richtung A über eine axiale Breite c im Reifen. Die vierte Gürtellage 17 erstreckt sich in axialer Richtung A über eine axiale Breite h im Reifen. Die Erstreckungsbreiten a, c, b und h sind dabei mit b > c > h und c >a gewählt. Dabei erstreckt sich die zweite Gürtellage 14 in beide axiale Richtungen jeweils um eine axiale Erstreckungslänge e über die axiale Position des jeweiligen Gürtelrandes der vierten Gürtellage 17 hinaus. Ebenso erstreckt sich die dritte Gürtellage 15 in beide axiale Richtungen jeweils um eine axiale Erstreckungslänge d über die axiale Position des jeweiligen Gürtelrandes der vierten Gürtellage 17 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 80mm ausgebildet.

Dabei erstreckt sich zu beiden axialen Seiten der vierten Gürtellage 17 die erste Gürtellage 13 um eine axiale Erstreckungslänge k über die axiale Position des jeweiligen Gürtelrandes der vierten Gürtellage 17 hinaus.

Die Gürtellage 13 erstreckt sich längs der axialen Erstreckung der zweiten Gürtellage (radial innere Arbeitslage) 14 und endet in axialer Richtung A mit ihren beiden Gürtellagenrändern jeweils in einer axialen Position zwischen der axialen Position des nächstliegenden Gürtellagenrandes der dritten Gürtellage (radial äußeren Arbeitslage) 15 und der axialen Position des nächstliegenden Gürtellagenrandes der vierten Gürtellage 17 im axialen Abstand k vom Gürtellagenrand der vierten Gürtellage 17 mit k < d < e und mit k≥0mm.

Im dargestellten Ausführungsbeispiel ist a>h und k>0mm gewählt.

Die Festigkeitsträger 23 und 27 sind Stahlkorde bekannter Art, beispielsweise des Typs "1+5", des Typs "3+6", des Typs "3+8" oder des Typs "3+9".

Die Festigkeitsträger 24 und 25 der beiden Arbeitslagen 14 und 15 sind dehnbare Stahlkorde bekannter Art, die bei Belastung auf Zug eine Bruchkraft F von F>2500N und bei 10% der Bruchkraft eine Dehnung D von D≥0,2% - beispielsweise mit 0,28% ≤ D ≤ 0,32% -aufweisen. Die Dehnung D der Festigkeitsträger ist dabei diejenige Dehnung, die beim vulkanisierten Reifen an dem von der Lage extrahierten Festigkeitsträger bestimmt wird. Die Messung der Dehnung erfolgt an Festigkeitsträgern, die mit ihrer vollen Länge dem fertig vulkanisierten Reifen entnommen sind. Der Festigkeitsträger wird zur Messung soweit von Gummiresten befreit, dass der Festigkeitsträger mit der am Festigkeitsträger verbleibender Gummimenge keinen Durchmesser aufweist, der größer ist als der 1,5-fache maximale Außendurchmesser des ungummierten Festigkeitsträgers. Die Bestimmung der Dehnung erfolgt gemäß der ASTM D 2969 - 04.

Die Festigkeitsträger 24 und 25 sind beispielsweise Stahlkorde des Typs "3+8x0,35HT" mit einer Bruchkraft F, welche ca. 3000N beträgt, und mit einer Dehnung D von D>0,2% bei 10% der Bruchkraft.

In einem Ausführungsbeispiel ist β = 50°, α = 18°, γ = 18°, ε = 50°, d = 11 mm, k=8mm und e = 15 mm gewählt.

In den oben im Zusammenhang mit den Figuren 1 bis 2 genannten Ausführungsbeispielen sind die Festigkeitsträger 27 Stahlkorde. In anderer, nicht dargestellter Ausführung sind die Festigkeitsträger 27 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

In anderer, nicht dargestellter Ausführung sind auch die Festigkeitsträger 23 und/oder die Festigkeitsträger 24 und/oder Festigkeitsträger 25 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

Die Winkel α, β, γ, ε bilden jeweils zumindest den in der Position der Äquatorebene Ä-Ä des Reifens ermittelten Neigungswinkel des jeweiligen Festigkeitsträgers.

### Bezugszeichenliste

### (Teil der Beschreibung)

- 1: Wulstbereich
- 2: Seitenwand
- 3: Kronenbereich (Kopfbereich)
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens vier von radial innen nach radial außen auf einander liegend angeordneten Gürtellagen (13, 14,15,17) ausgebildet ist, wobei die in radialer Richtung R am weitesten innen angeordnete, erste Gürtellage (13) mit parallelen in Gummi eingebetteten Festigkeitsträgern (23), die auf der ersten Gürtellage (13) angeordnete zweite Gürtellage (14) mit parallelen in Gummi eingebetteten Festigkeitsträgern (24), die auf der zweiten Gürtellage (14) angeordnete dritte Gürtellage (15) mit parallelen in Gummi eingebetteten Festigkeitsträgern (25) und die auf der dritten Gürtellage (15) angeordnete vierte Gürtellage (17) mit parallelen in Gummi eingebetteten Festigkeitsträgern (27) ausgebildet ist, wobei die zweite Gürtellage (14) und die dritte Gürtellage (15) Arbeitslagen sind, bei denen die Festigkeitsträger (24) der zweiten Gürtellage (14) in ihrer Ausrichtung einen Winkel α zur Umfangsrichtung U mit 10°<α<45° und die Festigkeitsträger (25) der dritten Gürtellage (15) in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger (24) der zweiten Gürtellage (14) eine entgegengesetzte axiale Neigungsrichtung zu den Festigkeitsträgern (25) der dritten Gürtellage (15) aufweisen, und wobei die Festigkeitsträger (23) der ersten Gürtellage (13) in ihrer Ausrichtung einen Winkel β zur Umfangsrichtung U mit 46°≤β≤54° einschließen,
wobei die Festigkeitsträger (23) der ersten Gürtellage (13) und die Festigkeitsträger (25) der dritten Gürtellage (15) und die Festigkeitsträger (27) der vierten Gürtellage (17) im Reifen mit gleicher axialer Neigungsrichtung ausgerichtet sind,
**dadurch gekennzeichnet,**
**dass** die Festigkeitsträger (27) der vierten Gürtellage (17) in ihrer Ausrichtung einen Winkel ε zur Umfangsrichtung U mit 46°≤ε<54° einschließen und die Festigkeitsträger (23,24,25,27) der vier Gürtellagen (13,14,15,17) Stahlkorde sind.

2. Fahrzeugluftreifen gemäß den Merkmalen von Anspruch 1,
wobei der Winkel α zur Umfangsrichtung U mit 15°≤α≤30° - insbesondere α=18°- und der Winkel γ zur Umfangsrichtung U mit 15°≤γ≤30°- insbesondere γ =18°- ausgebildet ist.

3. Fahrzeugluftreifen gemäß den Merkmalen von Anspruch 1 oder 2,
wobei der Winkel β zur Umfangsrichtung U mit β =50° ausgebildet ist.

4. Fahrzeugluftreifen gemäß den Merkmalen von einem der vorangegangenen Ansprüche,
wobei der Winkel ε zur Umfangsrichtung U mit ε =50° ausgebildet ist.

5. Fahrzeugluftreifen gemäß den Merkmalen von einem der vorangegangenen Ansprüche,
wobei die Neigung der Festigkeitsträger (23,24,25,27) der vier Gürtellagen (13,14,15,17) zur Umfangsrichtung U beginnend bei der ersten Gürtellage (13) bis zur vierten Gürtellage (17) einer Abfolge LRLL folgt, wobei L linkssteigend und R rechtssteigend ist.

6. Fahrzeugluftreifen gemäß den Merkmalen von einem der vorangegangenen Ansprüche,
wobei die zweite Gürtellage (14) in ihrer axialen Erstreckung im Fahrzeugluftreifen größer ausgebildet ist als alle anderen Gürtellagen (13,15,17) des Gürtels.

7. Fahrzeugluftreifen gemäß den Merkmalen von einem der vorangegangenen Ansprüche,
wobei die dritte Gürtellage (15) in ihrer axialen Erstreckung im Fahrzeugluftreifen größer ausgebildet ist als die erste und die vierte Gürtellage (13,17).

8. Fahrzeugluftreifen gemäß den Merkmalen von einem der vorangegangenen Ansprüche,
wobei die Festigkeitsträger (24,25) der beiden Arbeitslagen (14,15) im Reifen dehnbar ausgebildet sind mit einer Dehnung D von D ≥ 0,2% bei 10% der Bruchkraft.

## Claims

1. Pneumatic vehicle tyre for commercial vehicles, having a carcass (5), having a belt (9) constructed radially on the outside of the carcass (5), and having a profiled tread (10) constructed on the belt (9) radially on the outside of the belt (9), wherein the belt (9) is formed from at least four belt plies (13, 14, 15, 17) lying one on top of another from radially on the inside to radially on the outside, wherein the first belt ply (13), arranged innermost in the radial direction R, is formed with parallel strength members (23) embedded in rubber, the second belt ply (14), arranged on the first belt ply (13), is formed with parallel strength members (24) embedded in rubber, the third belt ply (15), arranged on the second belt ply (14), is formed with parallel strength members (25) embedded in rubber, and the fourth belt ply (17), arranged on the third belt ply (15), is formed with parallel strength members (27) embedded in rubber, wherein the second belt ply (14) and the third belt ply (15) are working plies, in which the strength members (24) of the second belt ply (14) enclose, in their orientation, an angle α with the circumferential direction U where 10°≤α≤45° and the strength members (25) of the third belt ply (15) each enclose, in their orientation, an angle γ with the circumferential direction where 10°≤γ≤45°, wherein, as seen in the circumferential direction U of the vehicle tyre, the strength members (24) of the second belt ply (14) exhibit an axial direction of inclination opposite to the strength members (25) of the third belt ply (15), and wherein the strength members (23) of the first belt ply (13) enclose, in their orientation, an angle β with the circumferential direction U where 46°≤β≤54°, wherein the strength members (23) of the first belt ply (13) and the strength members (25) of the third belt ply (15) and the strength members (27) of the fourth belt ply (17) are oriented in the tyre with the same axial direction of inclination,
**characterized**
**in that** the strength members (27) of the fourth belt ply (17) enclose, in their orientation, an angle ε with the circumferential direction U where 46°≤ε≤54° and the strength members (23, 24, 25, 27) of the four belt plies (13, 14, 15, 17) are steel cords.

2. Pneumatic vehicle tyre according to the features of Claim 1, wherein the angle α with the circumferential direction U is configured such that 15°≤α≤30° - in particular α=18° - and the angle γ with the circumferential direction U is configured such that 15°≤γ≤30° - in particular γ=18°.

3. Pneumatic vehicle tyre according to the features of Claim 1 or 2, wherein the angle β with the circumferential direction U is configured such that β=50°.

4. Pneumatic vehicle tyre according to the features of one of the preceding claims, wherein the angle ε with the circumferential direction U is configured such that ε=50°.

5. Pneumatic vehicle tyre according to the features of one of the preceding claims, wherein the inclination of the strength members (23, 24, 25, 27) of the four belt plies (13, 14, 15, 17) with respect to the circumferential direction U follows a sequence LRLL, starting from the first belt ply (13) to the fourth belt ply (17), wherein L is inclined upwardly to the left and R is inclined upwardly to the right.

6. Pneumatic vehicle tyre according to the features of one of the preceding claims, wherein the second belt ply (14) is configured to be greater in its axial extension in the pneumatic vehicle tyre than all the other belt plies (13, 15, 17) of the belt.

7. Pneumatic vehicle tyre according to the features of one of the preceding claims, wherein the third belt ply (15) is configured to be greater in its axial extension in the pneumatic vehicle tyre than the first and the fourth belt ply (13, 17).

8. Pneumatic vehicle tyre according to the features of one of the preceding claims, wherein the strength members (24, 25) of the two working plies (14, 15) in the tyre are configured to be extensible, having an elongation D of D≥0.2% at 10% of the breaking force.

## Revendications

1. Pneumatique de véhicule pour véhicules utilitaires, comprenant une carcasse (5), avec une ceinture (9) construite radialement à l'extérieur de la carcasse (5) et avec une bande de roulement profilée (10) construite sur la ceinture (9) radialement à l'extérieur de la ceinture (9), la ceinture (9) étant réalisée à partir d'au moins quatre couches de ceinture (13, 14, 15, 17) disposées radialement de l'intérieur vers l'extérieur les unes au-dessus des autres, la première couche de ceinture (13) disposée la plus à l'intérieur dans la direction radiale R étant réalisée avec des renforts parallèles (23) noyés dans le caoutchouc, la deuxième couche de ceinture (14) disposée sur la première couche de ceinture (13) étant réalisée avec des renforts parallèles (24) noyés dans le caoutchouc, la troisième couche de ceinture (15) disposée sur la deuxième couche de ceinture (14) étant réalisée avec des renforts parallèles (25) noyés dans le caoutchouc et la quatrième couche de ceinture (17) disposée sur la troisième couche de ceinture (15) étant réalisée avec des renforts parallèles (27) noyés dans le caoutchouc, la deuxième couche de ceinture (14) et la troisième couche de ceinture (15) étant des couches de travail dans lesquelles les renforts (24) de la deuxième couche de ceinture (14) forment, dans leur orientation, un angle α par rapport à la direction périphérique U tel que 10° ≤ α ≤ 45° et les renforts (25) de la troisième couche de ceinture (15) forment, dans leur orientation, à chaque fois un angle γ par rapport à la direction périphérique U tel que 10° ≤ γ ≤ 45°, les renforts (24) de la deuxième couche de ceinture (14), vu dans la direction périphérique U du pneumatique de véhicule, présentant une direction d'inclinaison axiale opposée à celle des renforts (25) de la troisième couche de ceinture (15), et les renforts (23) de la première couche de ceinture (13) formant, dans leur orientation, un angle β par rapport à la direction périphérique U tel que 46° ≤ β ≤ 54°,
les renforts (23) de la première couche de ceinture (13) et les renforts (25) de la troisième couche de ceinture (15) et les renforts (27) de la quatrième couche de ceinture (17) étant orientés dans le pneu avec la même direction d'inclinaison axiale,
**caractérisé en ce que**
les renforts (27) de la quatrième couche de ceinture (17) forment, dans leur orientation, un angle ε par rapport à la direction périphérique U tel que 46° ≤ ε ≤ 54° et les renforts (23, 24, 25, 27) des quatre couches de ceinture (13, 14, 15, 17) sont des câbles d'acier.

2. Pneumatique de véhicule selon les caractéristiques de la revendication 1, dans lequel l'angle α par rapport à la direction périphérique U est tel que 15° ≤ α ≤ 30°, en particulier α = 18°, et l'angle γ par rapport à la direction périphérique U est tel que 15° ≤ γ ≤ 30°, en particulier γ = 18°.

3. Pneumatique de véhicule selon les caractéristiques de la revendication 1 ou 2, dans lequel l'angle β par rapport à la direction périphérique U est tel que β = 50°.

4. Pneumatique de véhicule selon les caractéristiques de l'une des revendications précédentes, dans lequel l'angle ε par rapport à la direction périphérique U est tel que ε = 50°.

5. Pneumatique de véhicule selon les caractéristiques de l'une des revendications précédentes, dans lequel l'inclinaison des renforts (23, 24, 25, 27) des quatre couches de ceinture (13, 14, 15, 17) par rapport à la direction périphérique U en commençant au niveau de la première couche de ceinture (13) jusqu'à la quatrième couche de ceinture (17) suit une séquence LRLL, où L signifie une pente à gauche et R signifie une pente à droite.

6. Pneumatique de véhicule selon les caractéristiques de l'une des revendications précédentes, dans lequel la deuxième couche de ceinture (14), dans son étendue axiale dans le pneumatique de véhicule, est plus grande que toutes les autres couches de ceinture (13, 15, 17) de la ceinture.

7. Pneumatique de véhicule selon les caractéristiques de l'une des revendications précédentes, dans lequel la troisième couche de ceinture (15), dans son étendue axiale dans le pneumatique de véhicule, est plus grande que la première et la quatrième couche de ceinture (13, 17).

8. Pneumatique de véhicule selon les caractéristiques de l'une des revendications précédentes, dans lequel les renforts (24, 25) des deux couches de travail (14, 15) dans le pneumatique sont réalisés de manière extensible, avec un étirement D tel que D ≥ 0,2 % à 10 % de la force de rupture.
